## Europäisches Patentamt
## European Patent Office
## Office européen des brevets

(19)

(11) Veröffentlichungsnummer : **0 387 576 B1**

(12)

# EUROPÄISCHE PATENTSCHRIFT

(45) Veröffentlichungstag der Patentschrift :
**15.01.92 Patentblatt 92/03**

(51) Int. Cl.$^5$ : **C08G 65/30**

(21) Anmeldenummer : **90103642.6**

(22) Anmeldetag : **25.02.90**

(54) **Verfahren zur Entfernung von Katalysatoren aus Polyether-Polyolen.**

(30) Priorität : **11.03.89 DE 3907911**

(43) Veröffentlichungstag der Anmeldung :
**19.09.90 Patentblatt 90/38**

(45) Bekanntmachung des Hinweises auf die
Patenterteilung :
**15.01.92 Patentblatt 92/03**

(84) Benannte Vertragsstaaten :
**BE DE ES FR GB IT NL**

(56) Entgegenhaltungen :
**DD-A- 104 806**
**DE-A- 2 554 228**

(73) Patentinhaber : **BAYER AG**
**W-5090 Leverkusen 1 Bayerwerk (DE)**

(72) Erfinder : **Gupta, Pramod, Dr.**
**Langenmarkstrasse 27**
**W-5012 Bedburg (DE)**
Erfinder : **Sandhagen, Hans-Joachim, Dr.**
**Claudiusstrasse 32**
**W-4047 Dormagen (DE)**
Erfinder : **Rosenbaum, Heinz-Jörg, Dr.**
**Sebastian-Kneipp-Weg 10**
**Krefeld-Traar (DE)**

EP 0 387 576 B1

Jouve, 18, rue Saint-Denis, 75001 PARIS

## Beschreibung

Die vorliegende Erfindung betrifft ein Verfahren zur Entfernung von basischen Katalysatoren aus Polyether-Polyolen, die von der Herstellung der Polyether-Polyole noch in diesen Produkten verblieben sind. Die Entfernung erfolgt durch Hydrolyse und Einleiten von $CO_2$ sowie anschließendes Abfiltrieren des gebildeten Carbonats.

Die Polyoxyalkylen-Polyether-Polyole, auch Polyether-Polyole genannt, werden für die Herstellung von Polyurethanen verwendet. Die Polyether-Polyole werden überwiegend mit Polyisocyanaten umgesetzt und geben Urethanpolymere, die entweder in Form von elastischen Massen oder halbharten oder harten Schäumen vorliegen können (vgl. z.B. EP-A-116309, DE-AS 1929034, DE-OS 2019322, Ullmanns Encyklopädie der technischen Chemie, Bd. 19, S. 31 ff.).

Ferner sind Polyetherpolyole einsetzbar als Textilhilfsmittel, oberflächenaktive Substanzen und Hydraulikflüssigkeiten.

Die Eigenschaften der Polyurethane hängen sehr stark von den verwendeten Polyether-Polyolen-Isocyanaten und entsprechenden Zusatzstoffen wie z.B. Katalysatoren ab. Daher ist es notwendig, daß die Polyether-Polyole in sehr reiner Form vorliegen und weitestgehend frei von Verunreinigungen sind, die als Katalysatoren bei der Polyether-Polyol-Isocyanatreaktion wirken können.

Die großtechnische Herstellung von Polyether-Polyolen erfolgt durch die Polyadditionsreaktion von Alkylenoxiden an Startermoleküle mit aktiven Wasserstoffatomen (vgl. z.B. Ullmanns Enyklopädie der technischen Chemie, Band 19, S.31 ff.). Man erhält Polyether-Polyole mit freien Hydroxylgruppen, von denen ein Teil aufgrund des alkalischen Reaktionsmediums entständige Alkoholatgruppen trägt. In einem weiteren Schritt werden die Alkoholatgruppen in freie Hydroxylgruppen überführt. Im allgemeinen werden die alkalihaltigen Polyether-Polyole mit anorganischen oder organischen Säuren neutralisiert, wobei hydroxylgruppenhaltige Polyether-Polyole und wäßrige Salzlösungen entstehen. Anschließend werden das Wasser destillativ entfernt und die Salze durch Filtration von den Polyether-Polyolen getrennt.

Alternativ kann die Polyether-Polyol-Abtrennung durch Zentrifugieren und/oder Phasentrennung mit und ohne Zusatz von inerten Lösungsmitteln erfolgen.

Verwendet man für die Neutralisation anorganische Säuren wie z.B. Schwefelsäure, Phosphorsäure, Salzsäure oder Kaliumhydrogenphosphat oder organische Säuren wie z.B. Zitronensäure, Weinsäure etc. ist es notwendig, genau bis zum Äquivalenzpunkt zu neutralisieren, um auf der einen Seite ein Minimum an basischen Restalkalisalzen und auf der anderen Seite ein Minimum an Säureüberschuß zu erhalten. Ferner fällt das Alkalisalz häufig so fein aus, daß die Filtration trotz Verwendung von Filterhilfsmitteln Schwierigkeiten bereitet. Die Verwendung von starken Säuren kann zusätzlich zu Nebenreaktionen wie Veresterung, Veretherung und/oder Dehydratisierung von endständigen Hydroxylgruppen und/oder zum Abbau von Polyetherketten führen. So geschädigte Polyether weisen zusätzlich unangenehme Geruchskomponenten auf.

Eine andere Möglichkeit der Katalysatorentfernung ist z.B. (US-PS 3715402) die Hydrolyse des Alkoholats und anschließende Phasentrennung unter Verwendung von inerten organischen Lösungsmitteln ; Unterstützung der Phasentrennung kann durch Zentrifugieren oder elektrostatische Koaleszenz erfolgen. Diese Verfahrensvariante ist jedoch begrenzt auf wasserunlösliche Polyether-Polyole.

In einer Reihe von Patentschriften (vgl z.B. DE-OS 2208614, US-PS 4029879, US-PS 4137396) wird die Verwendung von Mg-Silikaten als Absorptionsmittel für die Entfernung von wäßriger KOH beschrieben.

Der hierbei anfallende Filterrückstand, bestehend aus KOH/Mg-Silikat und Polyether-Polyol ist schwierig zu handhaben und problematisch zu entsorgen. Ferner sind die Ausbeuteverluste relativ hoch.

In US-PS 3833669 wird unter anderem für die Entfernung von Katalysatoren über die Neutralisation mit $CO_2$ festgestellt, daß der Katalysator nur ungenügend neutralisiert wird und sich die Alkalicarbonate wegen sehr feiner Kristalle kaum filtrieren lassen, so daß man Polyether-Polyole erhält, die nicht den gewünschten Reinheitsgrad besitzen. In dieser Patentschrift wird die Bildung von schwerlöslichen Alkali-Magnesium-Karbonat-Doppelsalzen empfohlen.

Die Nachteile dieses Verfahrens sind die Handhabung des Filterrückstandes und seine Entsorgung. Weiter unbefriedigend ist die Verwendung der großen stöchimetrischen Überschüsse an $CO_2$ (2- bis 10-fach, Abgasentsorgung) und Mg-Salzen (1-bis 20-faches des Katalysatorgehaltes, Abfallentsorgung). Zusätzlich werden für die Abtrennung Filterhilfsmittel von 0,1 bis 1%, der Polyether-Polyolmengen benötigt, die eine eventuelle spätere Verwendung der Rückstände zusätzlich erschweren.

Aufgabe der vorliegenden Erfindung war es daher, ein einfaches und sicheres Verfahren zur Entfernung von Katalysatorresten aus Polyether-Polyolen bereitzustellen, das die vorgenannten Nachteile nicht aufweist.

Gegenstand der vorliegenden Erfindung ist nun ein Verfahren zur Entfernung von basischen Katalysatoren aus Polyether-Polyolen mit OH-Zahlen von 4 bis 250 durch Hydrolyse des alkalischen Alkoholats mit 0,7 bis 7 Gew.-% Wasser (bezogen auf Polyetherpolyol) bei 25 bis 120°C, Einleiten von $CO_2$ bei einer Temperatur

von 75 bis 120°C und Abfiltrieren des gebildeten Alkoholats, das dadurch gekennzeichnet ist, daß das $CO_2$ in etwa ein- bis zweifacher stöchiometrischer Menge eingeleitet und vor dem Abfiltrieren das Wasser entfernt wird.

Überraschenderweise wurde gefunden, daß bei Wahl geeigneter Reaktionsbedingungen und Parameter die Entfernung von basischen Katalysatoren über die Carbonatbildung sehr gut gelingt. Die hierbei entstehenden Salze fallen grobkristallin aus, so daß die Filtration, auch ohne Filterhilfsmittel, keine Probleme bereitet. Die so erhaltenen Polyether-Polyole weisen Restalkaligehalte von ca. 5 ppm auf. Zusätzlich wurde festgestellt, daß diese Polyether-Polyole im Gegensatz zu Produkten, die unter Verwendung von Mineralsäuren aufgearbeitet werden, praktisch geruchlos sind.

Die Verwendung von gasförmigem Kohlendioxid bietet folgende Vorteile : Keine unerwünschten Nebenreaktionen wie z.B. Veresterung oder Dehydratisierung, der Überschuß an $CO_2$ ist sehr leicht zu entfernen, keine Korrosionsprobleme bei Kesselmaterialien und Gewinnung von praktisch geruchlosen Polyethern.

Die hierbei anfallenden Alkalicarbonate können in so reiner Form gewonnen werden, daß ihr Einsatz als Rohstoff, z.B. bei der Glas- oder Keramikherstellung, möglich ist.

Die Polyether-Polyole, für die das erfindungsgemäße Verfahren geeignet ist, weisen eine OH-Zahl von etwa 4 bis 250 auf. Sie werden in an sich bekannter Weise (vgl. z.B. Saunders, Frisch Polyurethanes : Chemistry and Technology Part. I, Page 32-40 (1962)). hergestellt.

Das erfindungsgemäße Verfahren wurde in seiner allgemeinen Form wie folgt ausgeführt :

Das alkalische Polyadditionsprodukt wird durch Zugabe von Wasser hydrolysiert. Die Hydrolysetemperatur liegt zwischen 20 und 120°C. Anschließend wird durch Einleitung von gasförmigem Kohlendioxid der Katalysator bei Temperaturen von 40-120°C neutralisiert. In einer sich anschließenden Destillation wird das Wasser entfernt und die Kristallisation des Carbonats vervollständigt. Die Entfernung des Carbonats erfolgt mittels Filtration.

Besondere Ausführungsformen der vorliegenden Erfindung sind folgende :

Das alkalische Polyadditionsprodukt wird durch Zugabe von 0,7-7,0 Gew.-% Wasser bei Temperaturen von 20 bis 120°C, bevorzugt von 75-120°C, besonders bevorzugt von 40-90°C, hydrolysiert. Die Einleitung des gasförmigen $CO_2$ erfolgt unter Rühren bei 75-120°C, bevorzugt bei 40-90°C. Die verwendete Menge an $CO_2$ entspricht dem 1- bis 2-fachen stöchiometrischen Bedarf. Es wird eine Nachreaktionszeit von 0,5-2 h, bevorzugt 1-1,5 h, eingehalten. Anschließend wird unter Normaldruck oder im Vakuum das Wasser bei Temperaturen von 90-130°C entfernt. Das ausgefallene Salz wird abfiltriert, wobei gegebenenfalls auch Filterhilfsmittel verwendet werden können. Das so erhaltene Produkt wird nochmals entwässert.

Das erfindungsgemäße Verfahren soll anhand der folgenden Beispiele noch näher erläutert werden (%-Angaben bedeuten — soweit nicht anderes vermerkt ist — Gew.-%.)

Beispiel 1

5000 g eines Polyethers, aus Propylenglykol, Ethylenoxid (EO), Propylenoxid (PO), OH-Zahl 28 mit einer KOH-Menge von 0,5% wurde bei 90°C mit 1% Wasser versetzt, eine Stunde verrührt und danach mit 11,8 g gasförmigem Kohlendioxid neutralisiert. Anschließend wurde entwässert, Karbonat wurde filtriert und nach nochmaliger Entwässerung das Produkt analysiert.

```
Produktkenndaten:  OH-Zahl:          28 mg KOH/g
                   Visk. 25° C:      860 mPa.s
                   Wasser:           0,01
                   (BG) Basengehalt: 0,8 ppm KOH
```

Beispiel 2

5000 g eines Polyethers, aus Propylenglykol und Propylenoxid, OH-Zahl 56, mit einer KOH-Menge von 0,5% wurde bei 90°C mit 5% Wasser versetzt, eine Stunde verrührt und danach mit 17,6 g gasförmigem Kohlendioxid neutralisiert. Anschließend wurde entwässert, Karbonat wurde filtriert und nach nochmaliger Entwässerung das Produkt analysiert.

```
Produktkenndaten:  OH-Zahl:           56 mg KOH/g
                   Visk. 25° C:      300 mPa.s
                   Wasser:            0,01
                   (BG) Basengehalt: 0,3 ppm KOH
```

Beispiel 3

5000 g eines Polyethers, aus Propylenglykol, Ethylenoxid und Propylenoxid, OH-Zahl 28, mit einer KOH-Menge von 0,5% wurde bei 90°C mit 5% Wasser versetzt, eine Stunde verrührt und danach mit 14,9 g gasförmigem Kohlendioxid neutralisiert. Anschließend wurde entwässert, Carbonat wurde filtriert und nach nochmaliger Entwässerung das Produkt analysiert.

```
Produktkenndaten:  OH-Zahl:           28 mg KOH/g
                   Visk. 25° C:      850 mPa.s
                   Wasser:            0,01
                   (BG) Basengehalt: 2,0 ppm KOH
```

Beispiel 4

5000 g eines Polyethers, aus Trimethylpropan, Ethylenoxid und Propylenoxid, OH-Zahl 35, mit einer KOH-Menge von 0,5% wurde bei 90°C mit 1% Wasser versetzt, eine Stunde verrührt und danach mit 12,5 g gasförmigem Kohlendioxid neutralisiert. Anschließend wurde entwässert, Carbonat wurde filtriert und nach nochmaliger Entwässerung das Produkt analysiert.

```
Produktkenndaten:  OH-Zahl:           35 mg KOH/g
                   Visk. 25° C:      850 mPa.s
                   Wasser:            0,01
                   (BG) Basengehalt: 5,0 ppm KOH
```

**Patentansprüche**

1. Verfahren zur Entfernung von basischen Katalysatoren aus Polyether-Polyolen mit OH-Zahlen von 4 bis 250 durch Hydrolyse des alkalischen Alkoholats mit 0,7 bis 7 Gew.-% Wasser (bezogen auf Polyetherpolyol) bei 25 bis 120°C, Einleiten von $CO_2$ bei einer Temperatur von 75 bis 120°C und Abfiltrieren des gebildeten Alkoholats, dadurch gekennzeichnet, daß das $CO_2$ in etwa ein- bis zweifacher stöchiometrischer Menge eingeleitet und vor dem Abfiltrieren das Wasser entfernt wird.

2. Verfahren nach Anspruch 1, dadurch gekennzeichnet, daß die Hydrolyse bei Temperaturen von 40 bis 90°C durchgeführt wird.

3. Verfahren nach einem der Ansprüche 1 oder 2, dadurch gekennzeichnet, daß das $CO_2$ bei Temperaturen von 80 bis 95°C eingeleitet wird.

**Claims**

1. A process for the removal a basic catalysts from polyether polyols having OH values of 4 to 250 by hydrolysis of the alkaline alcoholate with 0.7 to 7% by weight water (based on polyether polyol) at 25 to 120°C, introduction of $CO_2$ at a temperature of 75 to 120°C and removal of the alcoholate formed by filtration, characterized in that the $CO_2$ is introduced in approximately once to twice the stoichiometric quantity and the water is removed before filtration.

2. A process as claimed in claim 1, characterized in that the hydrolysis is carried out at temperatures of 40 to 90°C.

3. A process as claimed in claim 1 or 2, characterized in that the $CO_2$ is introduced at temperatures of 80 to 95°C.

**Revendications**

1. Procédé pour l'élimination de catalyseurs basiques hors de polyéther-polyols ayant des indices OH de 4 à 250, par hydrolyse de l'alcoolate alcalin avec de 0,7 a 7% en poids d'eau (rapportés sur le polyéther-polyol) à une température de 25 à 120°C, introduction de $CO_2$ à une température de 75 à 120°C et séparation par filtration de l'alcoolate qui s'est formé, **caractérisé en ce qu**'on introduit le $CO_2$ en une quantité correspondant approximativement à 1 à 2 fois la quantité stoechiométrique et on élimine l'eau avant la séparation par filtration.

2. Procédé selon la revendication 1, **caractérisé en ce qu**'on effectue l'hydrolyse à des températures de 40 à 90°C.

3. Procédé selon l'une quelconque des revendications 1 ou 2, **caractérisé en ce qu**'on introduit le $CO_2$ à des températures de 80 à 95°C.